Europäisches Patentamt

(19) European Patent Office

Office européen des brevets

(11) Numéro de publication: **0 172 064**
**B1**

(12) **FASCICULE DE BREVET EUROPEEN**

(45) Date de publication du fascicule du brevet:
**26.10.88**

(21) Numéro de dépôt: **85401406.5**

(22) Date de dépôt: **10.07.85**

(51) Int. Cl.⁴: **F 16 D 55/224**

(54) **Frein à Disque.**

(30) Priorité: **20.07.84 FR 8411587**

(43) Date de publication de la demande:
**19.02.86 Bulletin 86/8**

(45) Mention de la délivrance du brevet:
**26.10.88 Bulletin 88/43**

(84) Etats contractants désignés:
**DE GB IT NL SE**

(56) Documents cités:
**EP - A - 0 030 502**
**FR - A - 2 306 371**
**FR - A - 2 309 758**
**FR - A - 2 398 930**
**US - A - 3 542 159**
**US - A - 3 602 328**

(73) Titulaire: **BENDIX France, 126, rue de Stalingrad,**
**F-93700 Drancy (FR)**

(72) Inventeur: **Meynier, Guy, 58 rue de Reims,**
**F-93600 Aulnay Sous Bois (FR)**
Inventeur: **Sauvée, Jean-Paul, 76 boulevard Félix Faure,**
**F-93300 Aubervilliers (FR)**

(74) Mandataire: **Lejet, Christian et al, Division Technique**
**Service Brevets BENDIX Europe 126, rue de Stalingrad,**
**F-93700 Drancy (FR)**

**Description**

L'invention a pour objet un frein à disque, notamment pour véhicule automobile, du type comportant un étrier coulissant chevauchant un disque à freiner tournant autour d'un axe, l'étrier comportant une première partie montée à coulissement sur un support fixe au moyen d'au moins une colonnette axiale et comportant un moteur de frein susceptible d'agir directement sur un premier élément de friction et, par réaction au travers de l'étrier coulissant, d'agir indirectement sur un deuxième élément de friction au moyen d'une deuxième partie de l'étrier enjambant le disque et articulée sur la première partie d'étrier selon un axe d'articulation parallèle au plan du disque.

Un frein de ce type est décrit dans le document FR-A-2 398 930. Ce document décrit un frein à disque dans lequel l'axe d'articulation de la seconde partie d'étrier sur la première partie d'étrier intersecte la ligne d'action du moteur de frein. Or, comme il est connu dans la technique, sous l'effet de la poussée du moteur de frein, l'étrier a tendance à fléchir, c'est-à-dire que sa partie en forme de U qui chevauche le disque a tendance à s'ouvrir, les deux branches extrêmes du U ayant tendance à s'écarter. Cet effet bien connu entraîne une répartition inégale des pressions sur l'élément de friction extérieur, l'effort le plus important se situant au niveau de la périphérie du disque, ce qui provoque une usure en biais radiale sur l'élément de friction extérieur. Ces phénomènes sont d'autant plus amplifiés que la longueur de la voûte de l'étrier, c'est-à-dire la partie passant au-dessus de la périphérie du disque, est importante.

On connaît du document US-A-3 542 159 un frein à disque correspondant au préambule de la présente revendication 1.

L'invention a pour objet un frein à disque du type décrit ci-dessus dans lequel la répartition des pressions sur l'élément de friction extérieur est notablement améliorée, limitant l'usure radiale en biais.

A cet effet, selon l'invention, l'axe d'articulation est situé radialement plus proche de l'axe de rotation du disque que la ligne d'action du moteur de frein, et en ce que lesdites surfaces s'étendent sensiblement axialement dans une zone située entre l'axe d'articulation et le disque.

Avec un tel agencement, la position de l'axe d'articulation est telle que, plus le moteur de frein développe d'efforts, plus la partie de l'étrier chevauchant le disque est sollicitée en rotation autour de l'axe d'articulation dans le sens radial vers l'axe de rotation du disque, ce mouvement compensant sensiblement la flexion de l'étrier dûe à l'effort de poussée du moteur, la butée étant destinée à limiter ce basculement autour de l'axe d'articulation pour les efforts les plus importants.

On décrira maintenant à titre d'exemple limitatif deux modes de réalisation de l'invention en se référant aux figures annexées dans lesquelles:

– la figure 1 est une vue de dessus d'un frein réalisé conformément à l'invention;
– la figure 2 est une vue en bout du frein de la figure 1 et comportant des portions en coupe;
– la figure 3 est une vue de côte selon la flèche A de la figure 1;
– la figure 4 est une vue partielle en coupe selon la ligne IV–IV de la figure 1;
– la figure 5 est une vue similaire à la figure 1 d'un deuxième mode de réalisation; et
– la figure 6 est une vue partielle en coupe selon la ligne IV–IV de la figure 5.

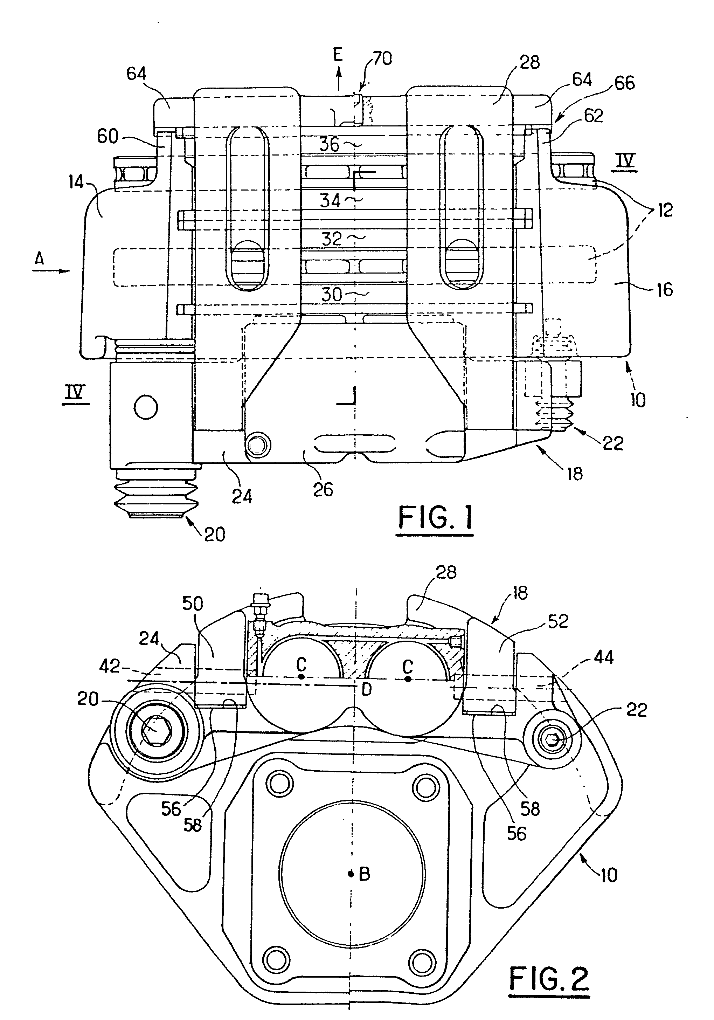

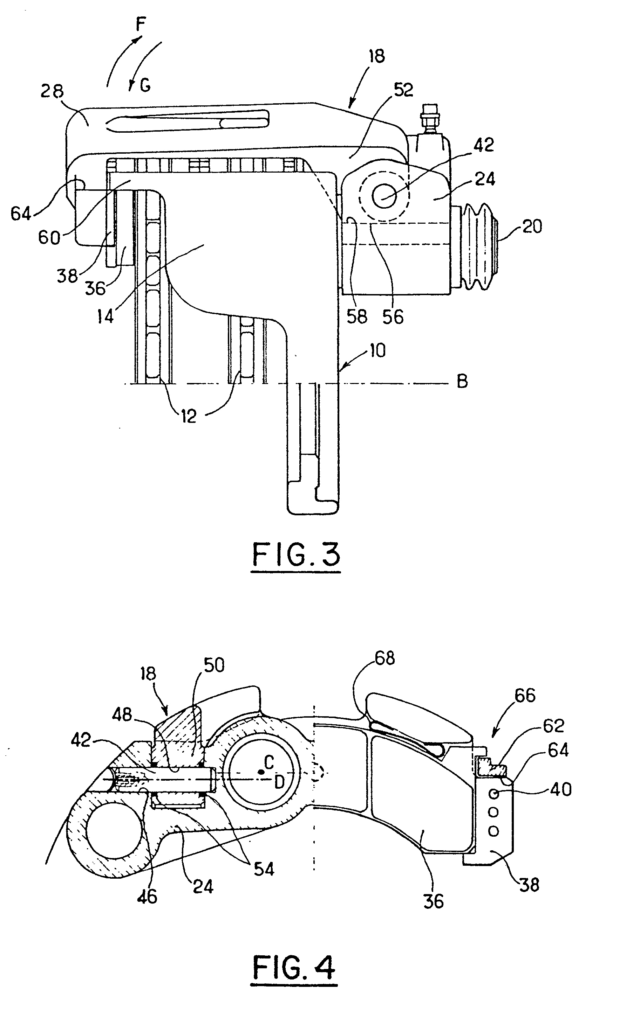

Le frein à disque représenté sur les figures 1 à 4 comporte un support fixe pour être associé à une partie fixe du véhicule (non-représentée) et constitué, dans le mode de réalisation représenté, par une plaque disposée au voisinage d'un disque 12 prévu pour être associé en rotation avec une roue du véhicule (non représentée). Dans ce mode de réalisation le disque 12 est double et est formé par deux disques coulissants l'un par rapport à l'autre par tout moyen convenable bien connu de l'homme de l'art. Le support fixe 10 comporte deux bras 14 et 16 chevauchant le disque 12. Le support fixe 10 reçoit en coulissement un étrier désigné dans son ensemble par la référence 18 au moyen de deux colonnettes axiales 20 et 22. Ces colonnettes sont réalisées d'une manière conventionnelle, c'est-à-dire, un axe fileté fixé sur le support 10 et traversant des alésages formés dans l'étrier 18. Comme on le voit plus précisément sur la figure 1, la colonnette 20 assure le guidage de l'étrier 18, tandis que la colonnette 22 est déstinée à empêcher la rotation de l'étrier 18 autour de la colonnette 20. L'étrier 18 est formé d'une première partie 24 comportant un moteur de frein désigné dans son ensemble par la référence 26, le moteur de frein étant constitué d'une manière conventionnelle par un piston susceptible de coulisser dans un alésage sous l'effet d'une pression hydraulique engendrée par une soucre de pression comme un maître cylindre par exemple. Ce moteur de frein 26 ne sera pas décrit d'avantage; on signalera cependant que, dans le mode de réalisation représenté, ce moteur de frein est double et comporte deux pistons et deux alésages parallèles. Cette première partie 24 de l'étrier 18 comporte les alésages de coulissement de colonnettes 20 et 22. L'étrier 18 comporte une deuxième partie 28 qui enjambe le disque 12. Le support fixe 10 reçoit en ancrage et en coulissement au moyen des ses bras 14 et 16, trois éléments de friction, un premier 30 placé entre le moteur de frein 26 et un premier disque, deux autres éléments de friction de friction 32 et 34 placés entre les deux disques 12. Un quatrième élément de friction 36 est reçu en ancrage sur des plaques 38 solidaires de la deuxième partie 28 au moyen, par exemple, de boulons 40 comme représenté plus particulièrement sur la figure 4.

Conforménent à l'invention, la deuxième partie 28 de l'étrier 18 est articulé sur la première 24 au moyen de deux pions 42 et 44 placés de part et d'autre du moteur de frein, ces pions 42 et 44 sont montés dans des alésages 46 formés dans la première partie 24 de l'étrier 18 et traversent des alésages 48 formés dans des bras 50 et 52 de la deuxième partie 28. Les alésages 48 peuvent tourner autour des pions 42 et 44 et cette rotation est protégée de la pollution extérieure au moyen de joints 54 placés entre les premières et deuxièmes parties de l'étrier 18. En désignant par 8 l'axe de rotation du disque 12 et par C, la ligne d'action du moteur de frein 26, qui dans le mode de réalisation représenté du fait du moteur de frein double est un plan défini par les axes des alésages des moteurs de frein, on voit que l'axe d'articulation de la deuxième partie 28 sur la première partie 24 désignée par la lettre D et matérialisée par l'axe des pions 42 et 44 est plus proche de l'axe B de rotation du disque que ne l'est la ligne d'action C–C des moteurs de frein. L'axe D est radialement plus proche de l'axe de rotation du disque B. En se reportant aux figures 2 et 3, on voit que les bras 50 et 52 comportent deux surfaces planes 56 placées en vis-à-vis de surfaces conjuguées 58 formées sur la première partie 24. Ces surfaces sont perpendiculaires au plan du disque 12 et sont situées dans une zone entre l'axe d'articulation D et le premier des disques 12 situé du côté du moteur de frein 26. Comme on le voit sur la figure 2, les surfaces 56 et 58 s'étendent dans un plan perpendiculaire au disque 12 et parallèle à l'axe d'articulation D. Comme on le voit sur les figures 1, 3 et 4, les bras 14 et 16 du support fixe 10 comportent des prolongements 60 et 62, qui sont susceptibles de coopérer avec des dégagements 64 formés sur la deuxième partie 28 ou lorsque l'élément de friction est neuf, ces prolongements 60 et 62 sont susceptibles de coopérer avec les plaques 38. Les prolongements 60 et 62, les dégagements 64 et les plaques 38 formant des moyens de verrouillage que l'on désignera dans leur ensemble par la référence 66. Un ressort 68 est placé entre les éléments de friction et la deuxième partie 28 et sollicite les éléments de friction radialement vers l'intérieur et la deuxième partie radialement vers l'extérieur. En se reportant à la figure 1, on voit que la partie 28 comporte au niveau de l'élément de friction 36 un dispositif d'écartement que l'on désignera par la référence 70 et constitué soit par une vis susceptible d'écarter axialement l'élément de friction 36 de la deuxième partie 28 ou bien par une fente destinée à recevoir une extrémité de tournevis ou de tout outil approprié et capable d'écarter également ces deux pièces.

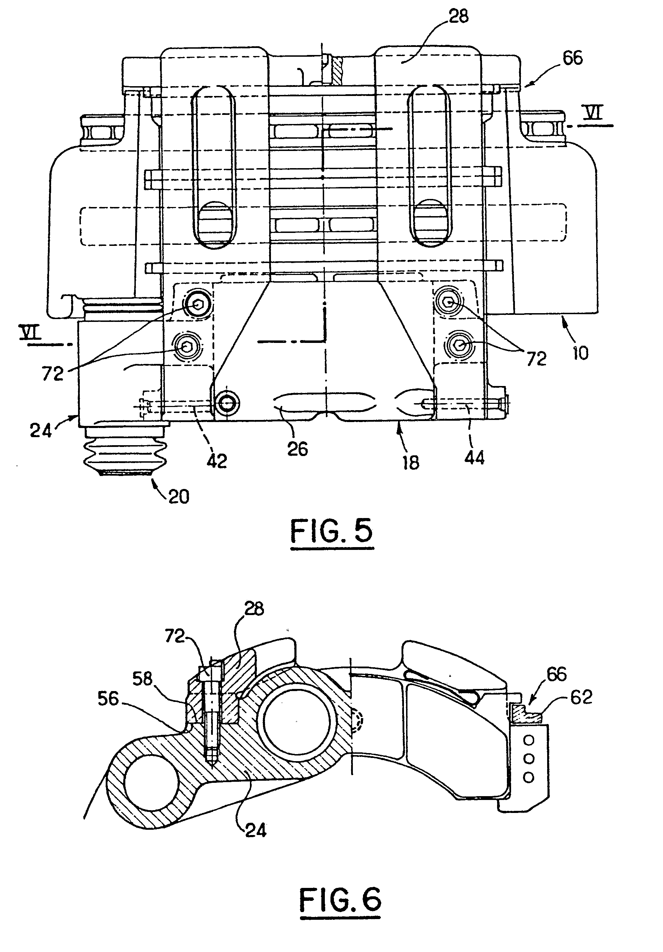

Les figures 5 et 6 représentent un deuxième mode de réalisation et les mêmes numéros de référence seront utilisés pour les même pièces remplissants les mêmes fonctions. Comme pour le premier mode de réalisation, le frein comporte un support fixe désigné dans son ensemble par la référence 10 et un étrier coulissant désigné dans son ensemble par la référence 18. Dans ce second mode de réalisation, le frein ne comporte qu'une seule colonnette axiale 20, la rotation de l'étrier autour de cette colonnette 20 étant empêchée par les moyens de verrouillage 66 identiques à ceux décrits dans le premier mode de réalisation. Les surfaces planes et les surfaces conjuguées respectivement 56 et 58 sont maintenues en appui les unes sur les autres au moyen de vis 72 coopérant d'une part avec la deuxième partie 28 au travers des têtes de vis et avec la première partie 24 au travers d'une liaison filetée. De même que dans le premier mode de réalisation, les premières et deuxièmes parties respectivement 24 et 28 sont articulées l'une par rapport à l'autre au moyen de deux pions 42 et 44 placés de part et d'autre du moteur de frein 26.

Dans les deux modes de réalisation qui viennent d'être décrits, le montage du frein sur le véhicule est réalisé de façon à ce que les freins soient à l'avant de la roue du véhicule dans le sens de la marche avant, de manière à ce que l'axe d'articulation D soit vertical et que la colonnette 20 soit à une altitude plus haute que l'axe du disque 12.

En se reportant aux figures 1 à 4, lorsque l'on veut procéder au remplacement des éléments de friction par exemple, on procède de la manière suivante:

A l'aide du dispositif d'écartement 70, en prenant appui sur le disque 12, au travers de l'élément de friction 36, on déplace l'étrier 18 dans le sens de la flèche E de la figure 1, ce mouvement rend inopérant les moyens de verrouillage 66, plus précisément, les prolongements 60 et 62 du support fixe ne coopérant plus avec les dégagements 64 ou les plaques 38 de la deuxième partie 28, cette dernière peut être basculée dans le sens de la flèche F de la figure 3 autour des pions 42 et 44. Ce basculement permet l'accès aux éléments de friction 30, 32, 34 et 36 pour leur remplacement. On notera que l'axe D défini par les pions 42 et 44 étant vertical, la deuxième partie 28 s'articule autour des ces pions 42 et 44 de la même manière qu'une porte tourne autour de ses gonds, et le mouvement de basculement de la deuxième partie 28 est donc indépendant du poids de cette partie.

Dans le deuxième mode de réalisation, comme représenté sur la figure 5, le remplacement des éléments de friction par exemple est effectué d'une façon identique à celui du premier mode de réalisation. On notera cependant que dans ce mode de réalisation le frein ne comporte qu'une seule colonnette 20 et que l'étrier 18 est susceptible de tourner autour de la colonnette 20 lorsque les moyens de verrouillage 66 sont rendus inopérants. On notera néanmoins que l'axe d'articulation de la deuxième partie 28 étant vertical, la colonnette 20 se trouvant à la partie supérieure du frein, la première partie 24 sera suspendue à la colonnette 20 et donc ne risque aucun mouvement intempestif qui pourrait être dangereux.

Lors de la mise en œuvre du moteur de frein, les pistons hydrauliques de celui-ci agissent directement sur l'élément de friction 30 qui déplace le disque qui lui est adjacent et par réaction, au travers du coulissement de ce disque, les éléments de friction 32 et 34 sont appliqués sur les disques. Par réaction au travers de l'étrier coulissant 18, la deuxième partie 28 agit sur l'élément de friction 36 et l'ensemble des quatre éléments de friction sont engagés à friction avec les deux disques 12. Lorsque l'effort du moteur de frein 26 augmente le décalage radial entre l'axe de poussée C et l'axe d'articulation D provoque un basculement de la deuxième partie 28 dans le sens de la flèche G de la figure 3. Ce basculement de la partie 28 solliciterait d'avantage la partie de l'élément de friction 36 située plus proche de l'axe du disque B si, simultanément, l'effort transmis par moteur de frein ne sollicitait cette partie 28 en flexion qui tendrait à exercer un effort plus grand sur la partie de l'élément de friction 36 la plus proche de la périphérie du disque. On voit ainsi, que plus l'effort développé par le moteur de frein sera important, plus l'effort de basculement dans le sens de la flèche G sera important, mais simultanément, la flexion de la partie 28 sera importante, et les deux phénomènes s'auto-compenseront.

Afin de limiter les déplacements de la partie 28 en cours d'application de freinage, on a limité le basculement de celui-ci au moyen des moyens de butée définies par les surfaces planes 56 et les surfaces conjuguées 58 portées respectivement par les deuxièmes et premières parties de l'étrier.

En ce qui concerne le deuxième mode de réalisation, la deuxième partie 28 de l'étrier est maintenue en appui permanent sur la première partie 24 au moyen des vis 72, ce qui évite les basculements même faibles de la deuxième partie par rapport à la première mais dans ce cas, les surfaces planes et les surfaces conjuguées sont légèrement inclinées pour permettre à la deuxième partie 28 d'entrer d'abord en contact avec l'élément de friction 36 au niveau de la zone la plus proche de l'axe de rotation du disque, le jeu axial existant entre la partie 28 et l'élément de friction 36 au niveau de la périphérie du disque, sera progressivement comblée au fur et à mesure de la flexion de cette deuxième partie 28 lors de l'accroissement de l'effort fourni par le moteur de frein. Il est bien évident, que dans ce mode de réalisation, les vis 72 devront être déposées pour le basculement de la deuxième partie 28 en vue du remplacement des éléments de friction.

L'invention n'est pas limité au mode de réalisation représenté et des modifications peuvent y être apportées sans sortir du cadre de la présente invention; en particulier, le moteur de frein 26 peut être simple ou double et peut être rapporté sur la première partie 24 et non réalisé mono-bloc comme représenté. De même, ce moteur de frein peut être à commande mécanique et les moyens de verrouillage 66 peuvent être réalisés selon des modes de réalisation connues de l'homme de l'art.

**Revendications**

1. Frein à disque du type comprenant un étrier coulissant (18) chevauchant au moins un disque (12) à freiner tournant autour d'un axe (B), l'étrier (18) comportant une première partie (24) montée à coulissement sur un support fixe (10) au moyen d'au moins une colonnette axiale (20) et comportant un moteur de frein (26) susceptible d'agir directement sur un premier élément de friction (30) et, par réaction au travers de l'étrier coulissant, d'agir indirectement sur un deuxième élément de friction (36) au moyen d'une deuxième partie (28) de l'étrier enjambant le disque (12) et articulée sur la première partie (24) selon un axe d'articulation (D) parallèle au plan du disque (12), le frein comprenant une butée (56-58), disposée entre les première (24) et deuxième (28) parties de l'étrier et s'étendant dans un plan perpendiculaire au plan du disque (12) et parallèle audit axe d'articulation (D), l'axe d'articulation (D) étant formé de part et d'autre du moteur de frein (26) au moyen de deux pions (42-44) montés chacun dans des alésages (46) formés sur ladite première partie (24) et traversant chacun un alésage (48) formé dans un des deux bras (50-52) de la deuxième partie d'étrier (28), la butée (56-58) étant formée par deux surfaces planes (56) portées par chacun des bras (50-52) et susceptibles de venir en appui sur deux surfaces conjuguées (58) portées par la première partie d'étrier (24), caractérisé en ce que l'axe d'articulation (D) est situé radialement plus proche de l'axe de rotation (B) du disque que la ligne d'action (C-C) du moteur de frein (26), et en ce que lesdites surfaces (56-58) s'étendent sensiblement axialement dans une zone située entre l'axe d'articulation (D) et le disque (12).

2. Frein à disque selon la revendication 1, caractérisé en ce que le frein comporte des moyens de verrouillage (66) susceptibles d'être mis hors service lors du basculement autour de l'axe d'articulation (D) de la deuxième partie d'étrier (28) par rapport à la première partie d'étrier (24).

3. Frein à disque selon la revendication 2, caractérisé en ce que les moyens de verrouillage (66) sont formés par des bras (14-16) du support fixe (10) s'étendant au-dessus du disque (12) et susceptibles de coopérer avec des dégagements (64) formés dans la deuxième partie (28).

4. Frein à disque selon la revendication 2, caractérisé en ce que les moyens de verrouillage comportent des vis (72) reliant les première (24) et la deuxième (28) partie d'étrier au droit desdites surfaces planes (56-58).

5. Frein à disque selon l'une des revendications 3 ou 4, caractérisé en ce qu'un ressort antibruit (68) placé entre la deuxième partie d'étrier (28) et les éléments de friction (30, 32, 34, 36) maintient au repos les surfaces planes (56) écartées desdites surfaces conjuguées (58).

6. Frein à disque selon la revendication 4, caractérisé en ce que les vis (72) maintiennent les surfaces planes (56) en appui sur les surfaces conjuguées (58).

7. Frein à disque selon l'une des revendications précédentes, caractérisé en ce qu'il comprend deux disques coaxiaux (12).

8. Frein à disque selon l'une des revendications précédentes, caractérisé en ce que l'axe d'articulation (D) est sensiblement vertical lorsque le frein est en position opérante.

## Patentansprüche

1. Scheibenbremse mit einem schwimmend gelagerten Bremssattel (18), der mindestens eine abzubremsende, um eine Achse (B) umlaufende Bremsscheibe (12) übergreift, wobei der Bremssattel (18) einen ersten Abschnitt (24) aufweist, der an einem Bremsträger (10) mittels mindestens eines axialen Bolzens (20) gleitend gelagert ist und einen Bremsmotor (26) aufweist, der unmittelbar auf einen ersten Bremsbacken (30) und durch Reaktion über den schwimmend gelagerten Bremssattel indirekt auf einen zweiten Bremsbacken (36) einwirken kann, und zwar über einen zweiten Abschnitt (28) des Bremssattels, der die Bremsscheibe (12) übergreift und am ersten Abschnitt (24) um eine zur Ebene der Bremsscheibe (12) parallele Gelenkachse (D) gelenkig angebracht ist, wobei die Bremse einen Anschlag (56–58) aufweist, der zwischen dem ersten (24) und dem zweiten (28) Abschnitt des Bremssattels angeordnet ist und in einer Ebene liegt, die senkrecht zur Ebene der Bremsscheibe (12) und parallel zu der besagten Gelenkachse (D) verläuft, wobei die Gelenkachse (D) beidseitig zum Bremsmotor (26) mittels zweier Zapfen (42–44) gebildet ist, die jeweils in Bohrungen (46) des besagten ersten Abschnittes (24) gelagert sind und jeweils durch eine Bohrung (48) in einem von zwei Armen (50–52) des zweiten Abschnitts des Bremssattels (28) verlaufen, wobei der Anschlag (56–58) von zwei ebenen Flächen (56) gebildet wird, die von jedem der Arme (50–52) getragen werden und sich an zwei zugeordnete Flächen (58) anlegen können, die von dem ersten Bremssattelabschnitt (24) getragen werden, dadurch gekennzeichnet, dass die Gelenkachse (D) radial näher an der Drehachse (B) der Bremsscheibe als die Wirkungslinie (C–C) des Bremsmotors (26) angeordnet ist und dass sich diese Flächen (56–58) im wesentlichen axial in einem Bereich erstrekken, der zwischen der Gelenkachse (D) und der Bremsscheibe (12) liegt.

2. Scheibenbremse nach Anspruch 1, dadurch gekennzeichnet, dass die Bremse Verriegelungsmittel (66) aufweist, deren Verriegelungsfunktion aufgehoben werden kann, wenn der zweite Bremssattelabschnitt (28) bezüglich des ersten Bremssattelabschnitts (24) um die Gelenkachse (D) kippt.

3. Scheibenbremse nach Anspruch 2, dadurch gekennzeichnet, dass die Verriegelungsmittel (66) von Armen (14–16) des Bremsträgers (10) gebildet werden, die sich über die Bremsscheibe (12) hinaus erstrecken und mit Absätzen (64) im zweiten Bremsmittelabschnitt (28) zusammenwirken können.

4. Scheibenbremse nach Anspruch 2, dadurch gekennzeichnet, dass die Verriegelungsmittel Schrauben (72) aufweisen, die den ersten (24) und den zweiten (28) Abschnitt des Bremssattels an der Stelle der besagten ebenen Flächen (56–58) miteinander verbinden.

5. Scheibenbremsen nach Anspruch 3 oder 4, dadurch gekennzeichnet, dass eine Antiratterfeder (68), die zwischen dem zweiten Bremssattelabschnitt (28) und den Bremsbacken (30, 32, 34, 36) angeordnet ist, die ebenen Flächen (56) beabstandet zu den besagten zugeordneten Flächen (58) in Ruhe hält.

6. Scheibenbremse nach Anspruch 4, dadurch gekennzeichnet, dass die Schrauben (72) die ebenen Flächen (56) in Anlage an den zugeordneten Flächen (58) halten.

7. Scheibenbremse nach einem der vorhergehenden Ansprüche, dadurch gekennzeichnet, dass sie zwei koaxiale Bremsscheiben (12) umfasst.

8. Scheibenbremse nach einem der vorhergehenden Ansprüche, dadurch gekennzeichnet, dass die Gelenkachse (D) in der Betriebsstellung der Bremse im wesentlichen vertikal verläuft.

## Claims

1. Disc brake of the type comprising a sliding caliper (18) straddling at least one disc (12) to be braked, rotating about an axis (B), the caliper (18) incorporating a first portion (24) slideably mounted on a fixed support (10) by means of at least one axial pillar (20) and incorporating a brake actuator (26) capable of acting directly upon a first friction component (30) and, by reaction through the sliding caliper, of acting indirectly upon a second friction component (36) by means of a second portion (28) of the caliper which is astride the disc (12), and is hinged to the first portion (24) along an axis of articulation (D) parallel to the plane of the disc (12) the brake comprising an abutment (56–58) positioned between the first portion (24) and second portion (28) of the caliper and lying in a plane perpendicular to the plane of the disc (12) and parallel to the said axis of articulation (D), the axis of articulation (D) being formed on each side of the brake actuator (26) by means of two pins (42–44) each mounted in bores (46) formed in the said first portion (24) and each passing through a bore (48) formed in one of the two arms (50–52) of the second caliper portion (28), the abutment (56–58) being formed by two flat surfaces (56) carried by each of the arms (50–52) and capable of coming into abutment against two mating surfaces (58) carried by the first caliper portion (24), characterized in that the axis of articulation (D) is situated radially nearer to the axis of rotation (B) of the disc than the line of action (C–C) of the brake actuator (26) and in that the said surfaces (56–58) lie essentially axially in a zone situated between the axis of articulation (D) and the disc (12).

2. Disc brake according to Claim 1, characterized in that the brake incorporates locking means (66) capable of being put out of action during tilting of the second caliper portion (28) relative to the first caliper portion (24) about the axis of articulation (D).

3. Disc brake according to Claim 2, characterized in that the locking means (66) are formed by arms (14–16) of the fixed support (10) extending above the disc (12) and capable of cooperating with cut-outs (64) formed in the second portion (28).

4. Disc brake according to Claim 2, characterized in that the locking means incorporate screws (72) joining the first (24) and the second (28) caliper portions at right angles with the said flat surfaces (56–58).

5. Disc brake according to one of Claims 3 or 4, characterized in that an anti-squeal spring (68) positioned between the second caliper portion (28) and the friction components (30, 32, 34, 36) holds, when at rest, the flat surfaces (56) separated from the said mating surfaces (58).

6. Disc brake according to Claim 4, characterized in that the screws (72) hold the flat surfaces (56) so as to bear against the mating surfaces (58).

7. Disc brake according to one of the preceding claims, characterized in that it comprises two coaxial discs (12).

8. Disc brake according to one of the preceding claims, characterized in that the axis of articulation (D) is substantially vertical when the brake is in the operating position.

FIG. 1

FIG.2

F

G

28

18

52

42

24

20

64

60

38

36

14

58 56

12

10

B

## FIG. 3

18

50

68

66

48

42

62

64

40

C
D

54

46 24

36

38

## FIG. 4

FIG. 5

FIG. 6